# DEMANDE DE BREVET EUROPEEN

(11) **EP 4 593 223 A1**
(43) Date de publication de la demande: **30.07.2025**
(21) Numéro de dépôt: 25151536.7
(22) Date de dépôt: 13.01.2025
(51) Int. Cl.: H02H 7/26, H02H 3/00

(54) **PROCEDE ET DISPOSITIF DE SURVEILLANCE D'UN RESEAU DE FOURNITURE EN ENERGIE ELECTRIQUE D'UN AERONEF**

(30) Priorité: 16.01.2024 FR 2400425
(71) Demandeur: Safran Electrical & Power, 31702 Blagnac (FR)
(72) Inventeur: GUILLARD, Eric, 77550 MOISSY-CRAMAYEL (FR); CHAPERON, Vincent, 77550 MOISSY-CRAMAYEL (FR)
(74) Mandataire: Cabinet Le Guen Maillet

(57) **Abrégé**

La présente invention concerne un procédé et un système de surveillance d'un réseau de fourniture en énergie électrique d'un aéronef dans lequel le réseau de fourniture en énergie électrique comporte une pluralité de dispositifs de protection et de distribution reliés entre eux par au moins un bus de communication. Selon l'invention, chaque dispositif de protection et de distribution :
- détermine son emplacement dans le réseau,
- sélectionne une table de configuration associée à son emplacement,
- reçoit de chaque autre dispositif de protection et de coupure une table d'état,
- applique au moins une partie des tables d'état à une règle métier déterminant si un contacteur du dispositif de protection et de coupure doit être ouvert ou fermé,
- commande le contacteur en fonction de la règle métier,
- transfère à chaque autre dispositif une table d'état mise à jour.

## Description

### DOMAINE TECHNIQUE

La présente invention concerne un procédé, un système et un dispositif de surveillance d'un réseau de fourniture en énergie électrique d'un aéronef.

### ETAT DE LA TECHNIQUE ANTERIEURE

Dans le domaine de l'aéronautique, la fourniture en énergie électrique des différents équipements d'un aéronef est assurée par au moins une source d'alimentation en énergie électrique, préférentiellement par plusieurs sources de fourniture en énergie électrique de manière à pallier un éventuel défaut de fonctionnement d'une ou plusieurs sources d'alimentation en énergie électrique. En fonction du fonctionnement ou d'un dysfonctionnement d'une source d'alimentation, d'un contacteur ou d'une charge, un système de surveillance centralisé commande l'ouverture ou la fermeture de contacteurs distants pour reconfigurer le réseau de fourniture en énergie électrique de manière à isoler le défaut de fonctionnement et garantir le bon fonctionnement des autres éléments reliés au réseau de fourniture en énergie électrique.

Pour des raisons de sécurité, le système de surveillance centralisé est bien souvent doublé. Le câblage et la configuration des différents éléments du réseau de fourniture en énergie électrique figent le logiciel embarqué dans le système de surveillance centralisé. Il est ainsi difficile de faire évoluer le réseau de fourniture en énergie électrique dans le temps. A chaque type ou version d'aéronef, il est nécessaire de développer un système de surveillance centralisé dédié à la configuration des différents éléments du réseau de fourniture en énergie électrique.

De plus, la maintenance des réseaux de fourniture en énergie électrique contrôlés de manière centralisée est aussi complexe.

Il est notamment souhaitable de fournir une solution qui permette de gérer un réseau de fourniture en énergie électrique d'un aéronef de manière plus flexible dans le temps tout en réduisant le câblage des différents éléments du réseau de fourniture en énergie électrique.

### EXPOSE DE L'INVENTION

Il est proposé un procédé de gestion surveillance d'un réseau de fourniture en énergie électrique d'un aéronef, le réseau de fourniture en énergie électrique comportant une pluralité de dispositifs de protection et de distribution reliés entre eux par au moins un bus de communication, caractérisé en ce que le procédé comporte les étapes, exécutées par chaque dispositif de protection et de distribution, de :
- détermination de l'emplacement du dispositif de protection et de distribution dans le réseau de fourniture en énergie électrique d'un aéronef,
- sélection, parmi un ensemble de tables de configuration mémorisé dans le dispositif de protection et de distribution, d'une table de configuration associée à l'emplacement du dispositif de protection et de distribution dans le réseau de fourniture en énergie électrique d'un aéronef,
- réception de chaque autre dispositif de protection et de coupure d'une table d'état,
- application d'au moins une partie des tables d'état à une règle métier déterminant si un contacteur du dispositif de protection et de coupure doit être ouvert ou fermé,
- commande du contacteur en fonction du résultat de la règle métier,
- transfert à chaque autre dispositif de protection et de coupure d'une table d'état mise à jour.

L'invention concerne aussi un dispositif de protection et de distribution compris dans un réseau de fourniture en énergie électrique d'un aéronef comportant une pluralité de dispositifs de protection et de distribution reliés entre eux par au moins un bus de communication, caractérisé en ce que le dispositif de protection et de distribution comporte :
- des moyens de détermination de l'emplacement du dispositif de protection et de distribution dans le réseau de fourniture en énergie électrique d'un aéronef,
- des moyens de sélection, parmi un ensemble de tables de configuration mémorisé dans le dispositif de protection et de distribution, d'une table de configuration associée à l'emplacement du dispositif de protection et de distribution dans le réseau de fourniture en énergie électrique d'un aéronef,
- des moyens de réception de chaque autre dispositif de protection et de coupure d'une table d'état,
- des moyens d'application d'au moins une partie des tables d'état à une règle métier déterminant si le contacteur du dispositif de protection et de coupure doit être ouvert ou fermé,
- des moyens de commande du contacteur en fonction du résultat de la règle métier,
- des moyens de transfert à chaque autre dispositif de protection et de coupure d'une table d'état mise à jour.

L'invention concerne aussi un système de protection et de distribution compris dans un réseau de fourniture en énergie électrique d'un aéronef comportant une pluralité de dispositifs de protection et de distribution, caractérisé en ce que les dispositifs de protection et de distribution sont reliés entre eux par au moins un bus de communication, chaque dispositif de protection et de distribution comporte :
- des moyens de détermination de l'emplacement du dispositif de protection et de distribution dans le réseau de fourniture en énergie électrique d'un aéronef,
- des moyens de sélection, parmi un ensemble de tables de configuration mémorisé dans le dispositif de protection et de distribution, d'une table de configuration associée à l'emplacement du dispositif de protection et de distribution dans le réseau de fourniture en énergie électrique d'un aéronef,
- des moyens de réception de chaque autre dispositif de protection et de coupure d'une table d'état,
- des moyens d'application d'au moins une partie des tables d'état à une règle métier déterminant si le contacteur du dispositif de protection et de coupure doit être ouvert ou fermé,
- des moyens de commande du contacteur en fonction du résultat de la règle métier,
- des moyens de transfert à chaque autre dispositif de protection et de coupure d'une table d'état mise à jour.

Ainsi, la présente invention permet de gérer un réseau de fourniture en énergie électrique d'un aéronef de manière plus flexible dans le temps tout en réduisant le câblage des différents éléments du réseau de fourniture en énergie électrique.

De plus, la présente invention, en utilisant le même type de dispositif de protection et de distribution quel que soit son emplacement dans le réseau de fourniture en énergie électrique, le câblage du réseau de fourniture en énergie électrique est simplifié et simple à mettre en oeuvre.

La surveillance du réseau de fourniture en énergie électrique, grâce à sa structure décentralisée réduit la complexité du réseau de fourniture en énergie électrique. La complexité est réduite par une simplification du câblage grâce à l'utilisation du bus de communication.

Selon un mode de réalisation particulier, le procédé comporte en outre une étape de test de l'intégrité du dispositif de protection et de distribution et les étapes de détermination, de sélection, de réception, d'application, de commande et de transfert sont exécutées si le test d'intégrité est positif.

Selon un mode de réalisation particulier, la règle métier déterminant si le contacteur du dispositif de protection et de coupure doit être ouvert ou fermé prend en outre en compte au moins un courant et/ou une tension mesurés par le dispositif de protection et de coupure et des valeurs maximales et/ou minimales de courant et/ou de tension comprises dans la table de configuration sélectionnée.

Selon un mode de réalisation particulier, le procédé comporte en outre les étapes de :
- vérification si une mise à jour des tables de configuration doit être effectuée,
- mise à jour des tables de configuration préalablement à la sélection.

Ainsi la présente invention permet de s'adapter simplement à d'éventuelles modifications du réseau de fourniture en énergie électrique de l'aéronef.

Selon un mode de réalisation particulier, le réseau comporte une pluralité de sources de tension, une pluralité de charges consommant de l'énergie électrique et une pluralité de bus d'alimentation et un dispositif de protection et de coupure est disposé entre chaque source de tension et un bus d'alimentation, un dispositif de protection et de coupure est disposé entre chaque charge et un bus d'alimentation et au moins un dispositif de protection et de coupure est disposé entre deux bus d'alimentation.

Il est également proposé un programme qui peut être stocké sur un support et/ou téléchargé d'un réseau de communication, afin d'être lu par un processeur. Ce programme comprend des instructions pour implémenter le procédé réalisé par chaque dispositif de protection et de distribution, tel que mentionné ci-dessus, lorsque ledit programme est exécuté par le processeur. L'invention concerne également un support de stockage d'informations stockant un tel programme.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre un exemple d'une architecture d'un réseau de fourniture en énergie électrique d'un aéronef dans lequel la surveillance du réseau de fourniture en énergie électrique d'un aéronef est assurée de manière distribuée par une pluralité de dispositifs de protection et de distribution ;
[Fig. 2] illustre un exemple d'architecture d'un dispositif de protection et de distribution selon la présente invention ;
[Fig. 3] illustre un exemple d'algorithme exécuté par chaque dispositif de protection et de distribution selon la présente invention ;
[Fig. 4] illustre un exemple particulier d'une architecture simplifiée d'un réseau de fourniture en énergie électrique d'un aéronef selon la présente invention.

### EXPOSE DETAILLE DE MODES DE REALISATION

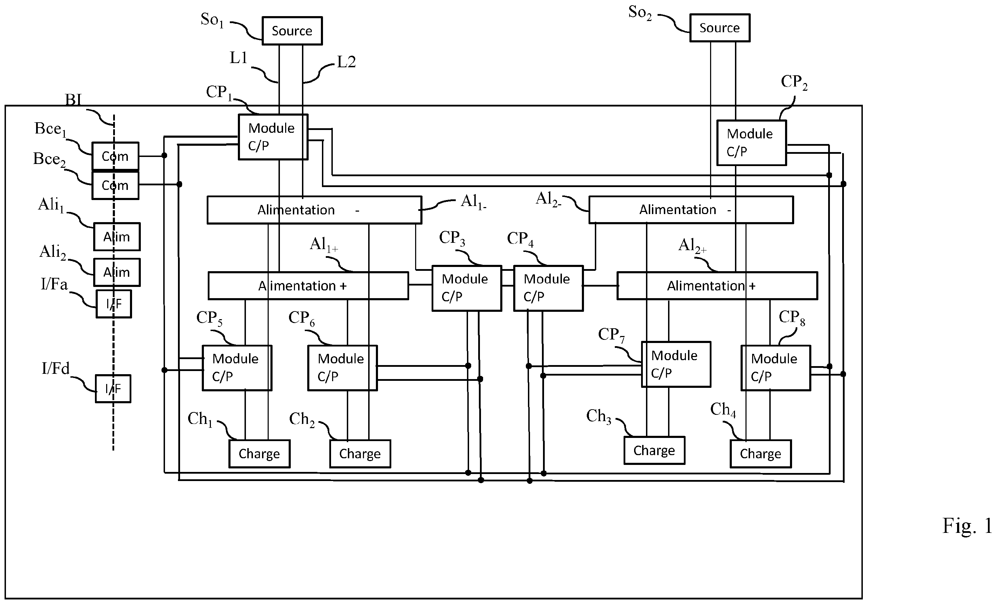

La Fig. 1 illustre un exemple d'une architecture d'un réseau de fourniture en énergie électrique d'un aéronef dans lequel la surveillance du réseau de fourniture en énergie électrique d'un aéronef est assurée de manière distribuée par une pluralité de dispositifs de protection et de distribution.

Dans l'exemple de la Fig. 1, le réseau de fourniture en énergie électrique de l'aéronef comporte deux sources de tension So₁ et So₂, quatre charges Ch₁ à Ch₄ et une pluralité de dispositifs de protection et de distribution CP₁ à CP₈ appelés aussi modules C/P.

Les dispositifs de protection et de distribution CP₁ à CP₈ sont reliés entre eux par deux bus de communication Bce₁ et Bce₂. Les bus de communications Bce₁ et Bce₂ sont identiques et sont au nombre de deux pour des raisons de fiabilité au cas où l'un d'entre eux serait défaillant.

Les bus de communication Bce₁ et Bce₂ permettent des échanges de données entre les dispositifs de protection et de distribution CP₁ à CP₈ et sont reliés respectivement par une interface à un système de communication de l'aéronef non représenté en Fig. 1.

Les dispositifs de protection et de distribution CP₁ à CP₈ sont alimentés par deux alimentations Ali₁ et Ali₂.

Les alimentations Ali₁ et Ali₂ sont reliées à des alimentations externes de l'aéronef non représentées en Fig. 1.

Dans un mode particulier, une interface analogique I/Fa est reliée aux bus de communication Bce₁ et Bce₂. L'interface analogique I/Fa permet l'échange de données avec des capteurs ou des actionneurs de l'aéronef.

Dans un mode particulier, une interface discrète I/Fd est reliée aux bus de communication Bce₁ et Bce₂. L'interface discrète I/Fd permet l'échange de données avec des éléments de commande ou de notification de l'aéronef.

Une barrière d'isolation BI assure une isolation galvanique entre le réseau de fourniture en énergie électrique et d'autres éléments électriques de l'aéronef.

Le dispositif de protection et de distribution CP₁ est relié à la source de tension So₁ et, selon l'état du contacteur qu'il comporte en interne, relie ou pas une terminaison positive de la source de tension So₁ à un bus d'alimentation positive Al₁₊.

La liaison entre la terminaison positive de la source de tension So₁ et le bus d'alimentation positive Ah+ est notée L1 et la liaison entre la terminaison négative de la source de tension So₁ et le bus d'alimentation négative Al₁₋ est notée L2.

Une terminaison négative de la source de tension So₁ est reliée à un bus d'alimentation négative Ah-.

Le dispositif de protection et de distribution CP₂ est relié à la source de tension So₂ et, selon l'état du contacteur qu'il comporte en interne, relie ou pas une terminaison positive de la source de tension So₂ à un bus d'alimentation positive Al₂₊.

Une terminaison négative de la source de tension So₂ est reliée à un bus d'alimentation négative Al₂₋.

Les dispositifs de protection et de distribution CP₃ et CP₄ permettent, selon l'état du contacteur qu'ils comportent en interne, de relier ou non les bus d'alimentation positive Al₁₊ et Al₂₊.

Le dispositif de protection et de distribution CP₅ est relié à la charge Ch₁ et, selon l'état du contacteur qu'il comporte en interne, relie ou pas une terminaison positive de la charge Ch₁ au bus d'alimentation positive Ah+.

Le dispositif de protection et de distribution CP₆ est relié à la charge Ch₂ et, selon l'état du contacteur qu'il comporte en interne, relie ou pas une terminaison positive de la charge Ch₂ au bus d'alimentation positive Ah+.

Le dispositif de protection et de distribution CP₇ est relié à la charge Ch₃ et, selon l'état du contacteur qu'il comporte en interne, relie ou pas une terminaison positive de la charge Ch₃ au bus d'alimentation positive Al₂₊.

Le dispositif de protection et de distribution CP₈ est relié à la charge Ch₄ et, selon l'état du contacteur qu'il comporte en interne, relie ou pas une terminaison positive de la charge Ch₄ au bus d'alimentation positive Al₂₊.

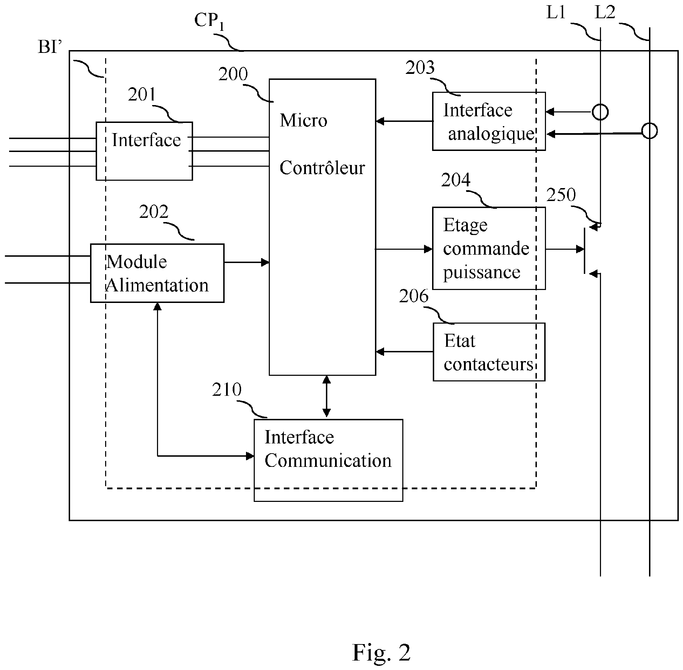

La Fig. 2 illustre un exemple du dispositif de protection et de distribution CP₁.

Il est à remarquer ici que les dispositifs de protection et de distribution CP₁ à CP₈ ont une architecture identique.

Le dispositif de protection et de distribution CP₁ comporte un microcontrôleur 200, une interface de programmation 201, un module d'alimentation 202, une interface analogique 203, un étage de commande de puissance 204, un contacteur 250, une interface de communication 210 et une interface 206 d'obtention de l'état du contacteur 250. L'interface 206 d'obtention de l'état du contacteur 250 comporte un contacteur auxiliaire non représenté en Fig. 2 qui est commandé par la bobine qui commande le contacteur 250. Lorsque le contacteur 250 est fermé, le contacteur auxiliaire l'est aussi. Lorsque le contacteur 250 est ouvert, le contacteur auxiliaire l'est aussi. Par exemple, quand le contacteur auxiliaire est fermé, un niveau logique haut est présent sur une entrée de l'interface d'obtention de l'état du contacteur 250. Quand le contacteur auxiliaire est ouvert, un niveau logique bas est présent sur l'entrée de l'interface d'obtention de l'état du contacteur 250.

Le microcontrôleur 200 comporte, non représentés en Fig. 2, une mémoire vive RAM (« Random Access Memory » en anglais); une mémoire morte ROM (« Read Only Memory » en anglais) ou une mémoire Flash ; et au moins un ensemble d'entrées-sorties. Le microcontrôleur 200 est capable d'exécuter des instructions chargées dans la mémoire RAM à partir de la mémoire ROM, ou d'un des bus de communication Bce₁ ou Bce₁. Lors de la mise sous tension du microcontrôleur 200, le microcontrôleur 200 est capable de lire dans la mémoire RAM des instructions et de les exécuter. Ces instructions forment un programme causant la mise en oeuvre, par le microcontrôleur 200, de tout ou partie des comportements de l'algorithme et étapes décrits ici.

Ainsi, tout ou partie de l'algorithmes et étapes décrits ici peut être implémenté sous forme logicielle par exécution d'un ensemble d'instructions par une machine programmable, telle qu'un DSP (« Digital Signal Processor » en anglais) ou le microcontrôleur 200. Tout ou partie des algorithmes et étapes décrits ici peut aussi être implémenté sous forme matérielle par une machine ou un composant (« chip » en anglais), tel qu'un FPGA (« Field-Programmable Gate Array » en anglais) ou un ASIC (« Application-Specific Integrated Circuit » en anglais). Ainsi, le microcontrôleur 200 comporte de la circuiterie électronique adaptée et configurée pour implémenter les comportements, l'algorithme et étapes décrits ci-après.

La mémoire ROM comporte une pluralité d'équations de fermeture ou d'ouverture du contacteur 250.

Chaque règle métier, appelée aussi règle de fonctionnement, de fermeture ou d'ouverture du contacteur 250 correspond à une affectation du dispositif de protection et de distribution dans le réseau de fourniture en énergie électrique de l'aéronef. Chaque règle métier de fermeture ou d'ouverture du contacteur prend en compte l'état d'au moins une partie des contacteurs compris dans les autres dispositifs de protection et de distribution du réseau de fourniture en énergie électrique de l'aéronef. Chaque règle métier de fermeture est comprise respectivement dans une table de configuration.

L'interface de programmation 201 permet d'indiquer par l'intermédiaire de broches de programmation l'affectation autrement dit la position du dispositif de protection et de distribution.

Le module d'alimentation 202 permet à partir des alimentations Ali₁ ou Ali₂ d'alimenter le dispositif de protection et de distribution.

Par l'intermédiaire de l'interface analogique 203, le microcontrôleur 200 reçoit des mesures de tension et/ou de courant mesurées dans les liaisons L1 et L2.

L'étage de commande de puissance 204 permet de commander l'ouverture ou la fermeture du contacteur 250.

L'interface 206 d'obtention de l'état du contacteur 250 permet au microcontrôleur 200 de connaître dans quel état est le contacteur 250.

Par l'intermédiaire de l'interface de communication 210 le microcontrôleur 200 transfère, sur le bus de communication Bce₁ ou Bce₂, des tables d'état du contacteur 250 à chaque dispositif de protection et de distribution et de recevoir, de chaque dispositif de protection et de distribution et par le bus de communication Bce₁ ou Bce₂, des tables d'état de leur contacteur respectif.

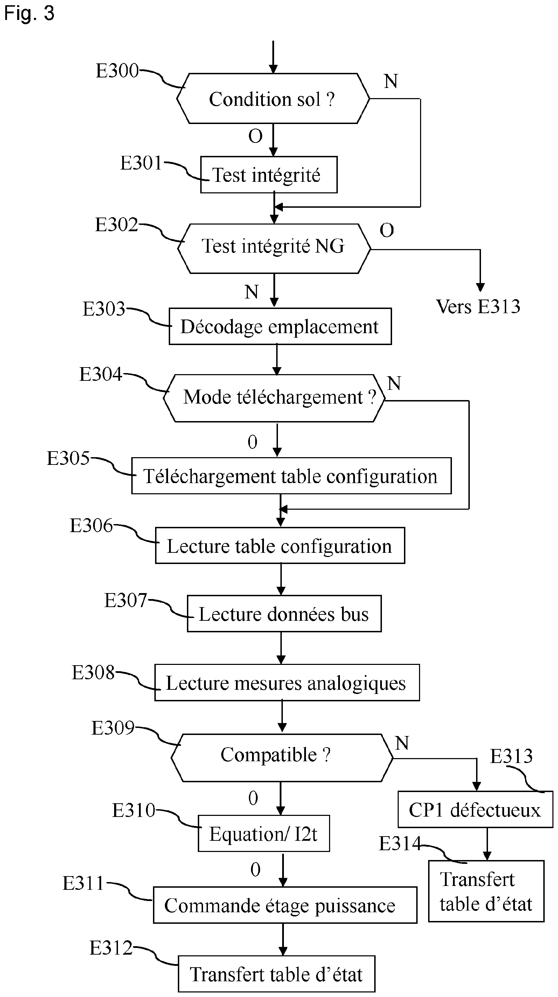

La Fig. 3 illustre un exemple d'algorithme exécuté par chaque dispositif de protection et de distribution selon la présente invention.

Le présent algorithme est par exemple exécuté avec une périodicité de l'ordre de la milliseconde.

Le présent algorithme est décrit dans un exemple dans lequel il est exécuté par le dispositif de protection et de distribution CP₁.

A l'étape E300, le microcontrôleur 200 vérifie si l'aéronef est au sol. Le microcontrôleur 200 est informé de la présence au sol de l'aéronef par l'intermédiaire du bus de communication Bce₁ ou Bce₂ ou par l'intermédiaire de l'interface discrète I/Fd.

Dans l'affirmative, le microcontrôleur 200 passe à l'étape E301. Dans la négative, le microcontrôleur 200 passe à l'étape E302.

A l'étape E301, le microcontrôleur procède à un test d'intégrité du fonctionnement du dispositif de protection et de distribution.

Le test d'intégrité consiste par exemple en une vérification de la cohérence des entrées, des sorties de la chaîne d'acquisition analogique comprise dans l'interface analogique 203, du bon fonctionnement de l'interface de communication 210, des bus de communication et du bon accès à la mémoire.

A l'étape E302, le microcontrôleur 200 vérifie si le test d'intégrité est négatif. Si le test d'intégrité est négatif, le microcontrôleur 200 passe à l'étape E312.

Si le test d'intégrité est positif, le microcontrôleur 200 passe à l'étape E303.

A l'étape E303, le microcontrôleur 200 obtient de l'interface 201 un mot binaire indiquant l'affectation du dispositif de protection et de distribution. Le mot binaire est défini par des micro interrupteurs ou cavaliers ou un câblage donné.

A l'étape E304, le microcontrôleur 200 vérifie si un téléchargement de logiciel doit être effectué. Par exemple, un téléchargement de logiciel est notifié au dispositif de protection et de distribution par l'intermédiaire du bus de communication Bce₁ ou Bce₂.

Dans l'affirmative, le microcontrôleur 200 passe à l'étape E305. Dans la négative, le microcontrôleur 200 passe à l'étape E306.

A l'étape E305, le microcontrôleur 200 procède au téléchargement du logiciel par l'intermédiaire du bus de communication Bce₁ ou Bce₂.

A l'étape E306, le microcontrôleur 200 lit la table de configuration associée au mot binaire indiquant l'affectation du dispositif de protection et de distribution.

La table de configuration comporte par exemple des informations indiquant si une mesure de tension et/ou une ou plusieurs mesures de courant doivent être effectuées, un courant de disjonction, une différence maximale entre les courants circulant dans les lignes L1 et L2, une valeur minimale de la tension mesurée entre les lignes L1 et L2, une valeur maximale de la tension mesurée entre les lignes L1 et L2, une règle métier déterminant si le contacteur 250 doit être ouvert ou fermé.

A l'étape suivante E307, le microcontrôleur 200 obtient de l'interface de communication 210, des données reçues par l'intermédiaire de l'interface I/Fd d'éléments de commande ou de notification de l'aéronef ainsi que, pour chaque autre dispositif de protection et de distribution CP₂ à CPs, une table d'état du contacteur du dispositif de protection et de distribution CP₂ à CP₈.

A l'étape suivante E308, le microcontrôleur 200 obtient de l'interface analogique, selon le contenu de la table de configuration, au moins une mesure de courant et/ou de tension.

A l'étape suivante E309, le microcontrôleur 200 vérifie si les mesures obtenues à l'étape E308 sont compatibles avec les valeurs minimales et maximales comprises dans la table de configuration.

Si les mesures obtenues sont compatibles avec les valeurs minimales et maximales comprises dans la table de configuration, le microcontrôleur 200 passe à l'étape E310. Dans la négative, le microcontrôleur 200 passe à l'étape E313.

A l'étape E310, le microcontrôleur 200 utilise le courant mesuré, le courant de disjonction, les tables d'état d'au moins une partie des dispositifs de protection et de distribution CP₂ à CP₈ et applique ceux-ci à la règle métier déterminant si le contacteur 250 doit être ouvert ou fermé.

A l'étape E311, le microcontrôleur 200 commande l'étage de commande puissance 204 pour appliquer au contacteur 250, l'état obtenu de la règle métier déterminant si le contacteur 250 doit être ouvert ou fermé.

A l'étape E312, le microcontrôleur 200 commande le transfert par l'intermédiaire de l'interface de communication 210 de la table d'état mise à jour avec l'état obtenu de la règle métier déterminant si le contacteur 250 doit être ouvert ou fermé.

A l'étape E313, le microcontrôleur 200 considère que le dispositif de protection et de distribution CP₁ est défectueux et met à jour la table d'état.

Si l'interface de communication 210 est opérationnelle, à l'étape E314, le microcontrôleur 200 commande le transfert par l'intermédiaire de l'interface de communication 210 de la table d'état mise à jour avec l'état obtenu de la règle métier déterminant si le contacteur 250 doit être ouvert ou fermé.

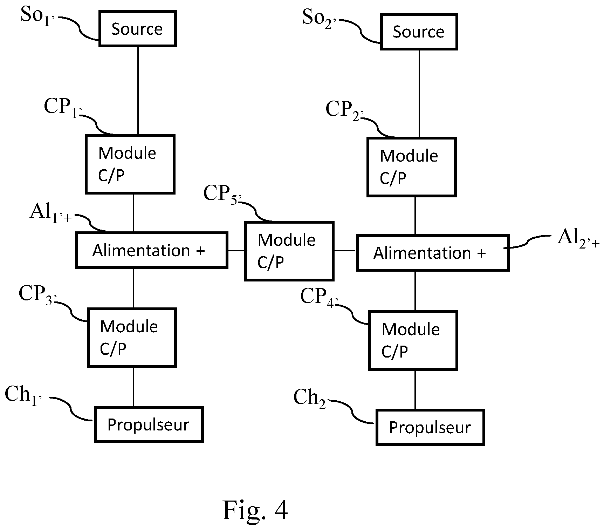

La Fig. 4 illustre un exemple particulier d'une architecture simplifiée d'un réseau de fourniture en énergie électrique d'un aéronef selon la présente invention.

Dans l'exemple de la Fig. 4, seules deux sources de tension So_{1'} et So_{2'}, deux charges Ch_{1'} et Ch_{2'}, deux bus d'alimentation positive Al_{1'+} et Al_{12'+} et cinq dispositifs de protection et de distribution CP_{1'} à CP_{5'} sont représentés.

Le dispositif de protection et de distribution CP_{1'} est disposé entre la source de tension So_{1'} et le bus d'alimentation positive Al_{1'+}.

Le dispositif de protection et de distribution CP_{2'} est disposé entre la source de tension So_{2'} et le bus d'alimentation positive Al_{2'+}.

Le dispositif de protection et de distribution CP_{3'} est disposé entre le bus d'alimentation positive Al_{1'+} et la charge Ch_{1'}.

Le dispositif de protection et de distribution CP_{4'} est disposé entre le bus d'alimentation positive Al_{2'+} et la charge Ch_{2'}.

Le dispositif de protection et de distribution CP_{5'} est disposé entre le bus d'alimentation positive Al_{1'+} et le bus d'alimentation positive Al_{2'+}.

Dans un fonctionnement classique, le contacteur du dispositif de protection et de distribution CP_{1'} est fermé, le contacteur du dispositif de protection et de distribution CP_{2'} est fermé, le contacteur du dispositif de protection et de distribution CP_{3'} est fermé, le contacteur du dispositif de protection et de distribution CP_{4'} est fermé et le contacteur du dispositif de protection et de distribution CP_{5'} est ouvert.

Le résultat de la règle métier de fermeture du contacteur du dispositif de protection et de distribution CP_{5'} est fermeture du contacteur si le contacteur du dispositif de protection et de distribution CP_{1'} est ouvert, le contacteur du dispositif de protection et de distribution CP_{2'} est fermé, le contacteur du dispositif de protection et de distribution CP_{3'} est fermé, et le contacteur du dispositif de protection et de distribution CP_{4'} est fermé.

Si le dispositif de protection et de distribution CP_{1'} détecte une tension délivrée par la source de tension So_{1'} inférieure à une valeur maximale, celui-ci commande l'ouverture de son contacteur et transfère une table d'état mise à jour.

Lorsque le dispositif de protection et de distribution CP_{5'} reçoit la table d'état mise à jour de chaque dispositif de protection et de distribution CP_{1'} CP_{4'}, le dispositif de protection et de distribution CP_{5'} applique celle-ci à la règle métier déterminant si le contacteur 250 doit être ouvert ou fermé, commande l'étage de puissance pour fermer le contacteur et transfère une table d'état mise à jour.

La présente invention est décrite dans un environnement dans lequel les sources de tension sont continues. La présente invention est aussi applicable lorsque les sources de tension fournissent une tension alternative.

## Revendications

1. Procédé de surveillance d'un réseau de fourniture en énergie électrique d'un aéronef dans lequel le réseau de fourniture en énergie électrique comporte une pluralité de dispositifs de protection et de distribution reliés entre eux par au moins un bus de communication, **caractérisé en ce que** le procédé comporte les étapes, exécutées par chaque dispositif de protection et de distribution, de :
- détermination de l'emplacement du dispositif de protection et de distribution dans le réseau de fourniture en énergie électrique d'un aéronef,
- sélection, parmi un ensemble de tables de configuration mémorisé dans le dispositif de protection et de distribution, d'une table de configuration associée à l'emplacement du dispositif de protection et de distribution dans le réseau de fourniture en énergie électrique d'un aéronef,
- réception de chaque autre dispositif de protection et de coupure d'une table d'état,
- application d'au moins une partie des tables d'état à une règle métier déterminant si un contacteur du dispositif de protection et de coupure doit être ouvert ou fermé,
- commande du contacteur en fonction de la règle métier
- transfert à chaque autre dispositif de protection et de coupure d'une table d'état mise à jour.

2. Procédé selon la revendication 1, **caractérisé en ce que** la règle métier déterminant si le contacteur du dispositif de protection et de coupure doit être ouvert ou fermé prend en outre en compte au moins un courant et/ou une tension mesurés par le dispositif de protection et de coupure et des valeurs maximales et/ou minimales de courant et/ou de tension comprises dans la table de configuration sélectionnée.

3. Procédé selon l'une quelconque des revendications 1 à 2, **caractérisé en ce que** le procédé comporte en outre les étapes de :
- vérification si une mise à jour des tables de configuration doit être effectuée,
- mise à jour des tables de configuration préalablement à la sélection.

4. Procédé selon l'une quelconque des revendications 1 à 3, **caractérisé en ce que** le procédé comporte en outre une étape de test de l'intégrité du dispositif de protection et de distribution et **en ce que** les étapes de détermination, de sélection, de réception, d'application, de commande et de transfert sont exécutées si le test d'intégrité est positif.

5. Dispositif de protection et de distribution compris dans un réseau de fourniture en énergie électrique d'un aéronef comportant une pluralité de dispositifs de protection et de distribution reliés entre eux par au moins un bus de communication, **caractérisé en ce que** le dispositif de protection et de distribution comporte :
- des moyens de détermination de l'emplacement du dispositif de protection et de distribution dans le réseau de fourniture en énergie électrique d'un aéronef,
- des moyens de sélection, parmi un ensemble de tables de configuration mémorisé dans le dispositif de protection et de distribution, d'une table de configuration associée à l'emplacement du dispositif de protection et de distribution dans le réseau de fourniture en énergie électrique d'un aéronef,
- des moyens de réception de chaque autre dispositif de protection et de coupure d'une table d'état,
- des moyens d'application d'au moins une partie des tables d'état à une règle métier déterminant si le contacteur du dispositif de protection et de coupure doit être ouvert ou fermé,
- des moyens de commande du contacteur en fonction du résultat de la règle métier,
- des moyens de transfert à chaque autre dispositif de protection et de coupure d'une table d'état mise à jour.

6. Système de protection et de distribution compris dans un réseau de fourniture en énergie électrique d'un aéronef comportant une pluralité de dispositifs de protection et de distribution **caractérisé en ce que** les dispositifs de protection et de distribution sont reliés entre eux par au moins un bus de communication, chaque dispositif de protection et de distribution comporte :
- des moyens de détermination de l'emplacement du dispositif de protection et de distribution dans le réseau de fourniture en énergie électrique d'un aéronef,
- des moyens de sélection, parmi un ensemble de tables de configuration mémorisé dans le dispositif de protection et de distribution, d'une table de configuration associée à l'emplacement du dispositif de protection et de distribution dans le réseau de fourniture en énergie électrique d'un aéronef,
- des moyens de réception de chaque autre dispositif de protection et de coupure d'une table d'état,
- des moyens d'application d'au moins une partie des tables d'état à une règle métier déterminant si le contacteur du dispositif de protection et de coupure doit être ouvert ou fermé,
- des moyens de commande du contacteur en fonction du résultat de la règle métier,
- des moyens de transfert à chaque autre dispositif de protection et de coupure d'une table d'état mise à jour.

7. Système selon la revendication 6, **caractérisé en ce que** le réseau comporte une pluralité de sources de tension, une pluralité de charge consommant de l'énergie électrique et une pluralité de bus d'alimentation et **en ce que** un dispositif de protection et de coupure est disposé entre chaque source de tension et un bus d'alimentation, un dispositif de protection et de coupure est disposé entre chaque charge et un bus d'alimentation et au moins un dispositif de protection et de coupure est disposé entre deux bus d'alimentation.

8. Produit programme d'ordinateur comportant des instructions pour implémenter, par un processeur, le procédé selon l'une quelconque des revendications 1 à 4, lorsque ledit programme est exécuté par ledit processeur.

9. Support de stockage d'informations stockant un programme d'ordinateur comprenant des instructions pour implémenter, par un processeur, le procédé selon l'une quelconque des revendications 1 à 4, lorsque ledit programme est lu et exécuté par ledit processeur.
